# EUROPÄISCHE PATENTSCHRIFT

(11) **EP 3 633 819 B1**
(45) Veröffentlichungstag und Bekanntmachung des Hinweises auf die Patenterteilung: **11.11.2026**
(21) Anmeldenummer: 19200386.1
(22) Anmeldetag: 30.09.2019
(51) Int. Cl.: H02J 7/00

(54) **VERFAHREN ZUM LADEN EINER BATTERIE**
METHOD FOR CHARGING A BATTERY
PROCÉDÉ DE CHARGE D'UNE BATTERIE

(30) Priorität: 04.10.2018 DE 102018124547
(43) Veröffentlichungstag der Anmeldung: 08.04.2020
(73) Patentinhaber: Jungheinrich Aktiengesellschaft, 22047 Hamburg (DE)
(72) Erfinder: von Mirbach-Wahn, Lennart, 22763 Hamburg (DE); Käbitz, Stefan, 22851 Norderstedt (DE); Burkhart, Armin, 22850 Norderstedt (DE)
(74) Vertreter: Hauck Patent- und Rechtsanwälte PartmbB

(56) Entgegenhaltungen:
- EP-A2- 0 767 524
- WO-A2-2014/131765
- DE-A1- 102012 020 014
- US-A- 5 998 967

## Beschreibung

Die vorliegende Erfindung betrifft ein Verfahren zum Laden einer Batterie, insbesondere einer Batterie für ein Flurförderzeug.

Gegenstand der Erfindung ist der Ladevorgang bei einer Batterie, insbesondere bei einer Lithium-Ionen Batterie wie sie beispielsweise für Flurförderzeuge eingesetzt wird. Die Batterie besteht typischerweise aus einer Vielzahl von zusammengeschalteten Batteriezellen, die aufgrund von Fertigungs- oder altersbedingten Schwankungen von Kapazität und Innenwiderstand auch beim Ladevorgang Ladung ungleichmäßig aufnehmen können. Es hat sich daher entwickelt, einen Ladevorgang durch ein sogenanntes Balancing zu begleiten, bei dem Unterschiede zwischen den Batteriezellen ausgeglichen werden. Ein solches Balancing zum Ausgleichen von Ladungsunterschieden der Batteriezellen erfolgt nach jedem Ladevorgang beim Kunden. Auch vor der Auslieferung der Batterie erfolgt werksseitig ein Balancingvorgang, mit dem die Batteriespannung und damit die in der Batterie gespeicherte Leistung gleichmäßig auf die Batteriezellen verteilt wird. Dieses anfängliche Balancing kann eine gewisse Zeitdauer in Anspruch nehmen.

Bekannt ist das sogenannte passive Balancing, bei dem für Batteriezellen, die ein bestimmtes Spannungsniveau erreicht haben, der Ladestrom über einen parallel geschalteten Widerstand geleitet wird, sodass diese Batteriezellen am weiteren Ladevorgang nur noch gering oder gar nicht teilnehmen. Das aktive Balancing besteht darin, dass ein Ladungstransfer zwischen den Batteriezellen stattfindet, bei dem von Batteriezellen mit einer höheren Batteriespannung Ladung zu den Zellen mit niedrigerer Batteriespannung transportiert wird. Eine weitere Form des Balancing erfolgt beim Entladen der Batterie, wobei hier nicht ausgeglichene Ladungsunterschiede zwischen den Batteriezellen über den Verbrauch von Ohmscher Energie an parallel geschalteten Widerständen erfolgt, passives Balancing, oder durch Ladungstransfer, aktives Balancing. Anders als beim Balancing nach oder während des Ladevorganges, ist beim Entlade- Balancing kein Kontakt mit einem Ladegerät erforderlich.

Für den Ladevorgang, insbesondere für Lithium-Ionen-Batterien wird überwiegend ein passives Balancing eingesetzt.

Die Batterie ist nach Abschluss des Balancings zu 100 % geladen und kann beispielsweise im Flurförderzeug eingesetzt werden. Aus dem praktischen Einsatz ist bekannt geworden, dass ein Problem mit einer Überladung von einzelnen Batteriezellen auftreten kann, wodurch mitunter auch die Lebensdauer der gesamten Batterie reduziert wird. Eine mögliche Ursache für das Überladen der Batterien wird in Relaxationsprozessen innerhalb der Zellen gesehen, wodurch die Spannung der Zelle langsam absinkt und die Zelle im Ergebnis weiter geladen wird, obwohl sie bereits voll ist.

Eine überladene Batterie hat nicht nur im Hinblick auf die Lebensdauer Nachteile, sondern kann auch beim praktischen Einsatz im Flurförderzeug zu einer Abschaltung des Fahrzeugs führen, beispielsweise wenn unmittelbar nach dem Abschluss eines Ladevorgangs ein Stopp- oder Bremsvorgang mit einem Rekuperationsbetrieb erfolgt. **In** diesem Fall kann die Batterie die zusätzliche Leistung nicht aufnehmen und es kommt zu einem Not-Aus für das Fahrzeug. Derartige Ereignisse können beispielsweise auch durch eine besonders niedrigen Betriebstemperatur begünstigt werden.

Auch beim Herstellungsprozess für die Batterien im Werk, fordert das abschließende Balancing nach dem Laden der Batterie viel Zeit, wodurch mitunter der gesamte Produktionsprozess verlangsamt wird.

Aus WO 2014/131765 A2 ist Verfahren zur Erhöhung der verfügbaren Kapazität in einem Batteriestrang mit einer Vielzahl von seriell geschalteten Batteriezellen bekannt geworden, wobei die Batteriezellen, basierend auf ihre vorhandene Ladungsmenge untereinander ausgeglichen werden.

Aus DE102012020014A1 ist ein Verfahren zum Steuern eines Entladevorgangs einer Batterie bekannt, bei dem für mehrere seriell verschaltete Batteriezellen ein absoluter Energieinhalt bestimmt wird und das Ausgleichen durch Teilentladen zumindest einer der Batteriezellen auf einen einheitlichen, absoluten Energieinhalt erfolgt.

Aus US 5998967 ist eine Lithium-Ionen-Batterie bekannt, bei der durch eine Schaltungskonfiguration eine schnelle Angleichung der Ladungsmenge der einzelnen Batteriezellen erfolgen kann.

Aus EP 0767524 A2 ist eine Schaltung zur Angleichung einer Mehrzahl von Stromquellen in einer Reihenschaltung bekannt geworden, bei der Batteriezellen in einem Batteriepack, durch Überwachung der Spannungen der Batteriezellen ausgeglichen und die Batteriezelle, die die höchste Spannung im Vergleich zu anderen Batteriezellen in dem Batteriepack aufweist, entladen wird.

Der Erfindung liegt die Aufgabe zugrunde ein Ladeverfahren für eine Batterie, insbesondere eine Lithium-Ionen-Batterie zur Verfügung zu stellen, das mit einfachen Mitteln die mögliche Nutzung der Batterie verbessert.

Erfindungsgemäß wird die Aufgabe durch ein Verfahren mit den Merkmalen aus Anspruch 1 gelöst. Vorteilhafte Ausgestaltungen bilden die Gegenstände der Unterhaltsansprüche.

Das erfindungsgemäße Verfahren ist vorgesehen und bestimmt zum Laden einer Batterie, insbesondere einer Batterie für ein Flurförderzeug. Das Verfahren sieht eine Reihe von Verfahrensschritten vor, wobei in einem ersten Verfahrensschritt ein Laden der Batterie, abhängig von einer gemessenen Batteriespannung erfolgt. Bei diesem Ladevorgang gilt die Batteriespannung mit ihren Spannungen der einzelnen Batteriezellen als Indikator für den Ladezustand der Batterie. Nach dem Ladevorgang erfolgt ein passives Balancing an den Batteriezellen, das für eine Ladezeitdauer vorgesehen ist. An das passive Balancing schließt sich ein Entladebalancing für eine Entladezeitdauer an. Der Ladevorgang endet, wenn eine vorbestimmte Mindestanzahl von Batteriezellen eine Endspannung überschreitet oder das Verfahren kehrt nach der Entladezeitdauer zu dem Ladevorgang und dem anschließenden Balancing zurück. Wesentliches Merkmal der vorliegenden Erfindung ist, dass hierbei zwei Formen des Balancing vorgesehen sind und miteinander kombiniert werden. Es erfolgt also nicht ausschließlich ein Balancing über ein passives Balancing und es erfolgt auch nicht ausschließlich ein Balancing der Batteriezellen über ein Entladebalancing. Ein weiteres wesentliches Merkmal des erfindungsgemäßen Ladeverfahrens besteht darin, dass dieses wiederholt wird. Bei dieser Abfolge gibt es einen Ladevorgang, ein passives Balancing und ein Entladebalancing, bevor das Verfahren wieder zu dem Ladevorgang an den Beginn oder zu dem passiven Balancing zurückkehrt. Beide Aspekte ergeben ganz besondere Vorteile: Das Entladebalancing verhindert insbesondere das Problem, dass einzelne Batteriezellen überladen werden und das Fahrzeug beim direkten Einsatz ein Abschalten der Batterie auslöst. Mit dem Entladebalancing werden gerade die stark und zu stark geladenen Batterieelemente entladen. Der Wechsel zwischen passivem Balancing und Entladebalancing als ein Teil an den Balancingvorgängen bei einer ersten Auslieferung wird auf den Kunden abgewälzt. Dieser erhält dann eine Batterie, die nicht 100 % SoC aufweist, sondern einen niedrigeren Ladezustand besitzt, wobei dann der Ladevorgang durch das Entladebalancing bei dem Kunden fortgesetzt wird. Da das Entladebalancing ohne Ladegerät erfolgen kann, kann dies zeitgleich mit einer Inbetriebnahme der Batterie erfolgen, sodass während des Betriebs zunächst ein Entladebalancing für die Batterie erfolgt.

**In** einer bevorzugten Ausgestaltung ist das passive Balancing so ausgelegt, dass jede der Batteriezellen, die eine erste Mindestzellspannung überschreitet mit einem verminderten Ladestrom versorgt wird. Der verminderte Ladestrom schließt hierbei auch einen Ladestrom von 0 Ampere mit ein. Durch den verminderten Ladestrom wird verhindert, dass die Batteriezelle, deren Spannung den ersten Mindestzellspannungswert überschreitet weiter und damit überladen wird.

Bevorzugt erfolgt das Entladebalancing so, dass Ladungsunterschiede zwischen den Batteriezellen durch entsprechend unterschiedliche Entladeströme und/oder Spannungen für die Batteriezellen abgebaut werden. Bei dem Entladebalancing werden die Leistungsunterschiede zwischen den Batteriezellen bevorzugt anhand der an den Batteriezellen anliegenden Spannungen ermittelt. Durch den Entladevorgang, bei dem stark geladene Batteriezellen stärker entladen werden, als weniger stark geladene Batteriezellen, wird der Ladungszustand der Batteriezellen untereinander vergleichmäßigt. Bei dem Entladebalancing wird bevorzugt ein Widerstand als zusätzlicher Verbraucher parallel zu der oder den Batteriezellen geschaltet, die entladen werden sollen. Der Vorgang des Entladebalancing kann zusätzlich auch auf relative Spannungsdifferenzen für mehrere Batteriezellen abstellen und aus diesen die Entladezeitdauer für die Batteriezellen berechnen. Technischer Hintergrund ist hier, dass größere Spannungsdifferenzen auf größere Ladungsunterschiede zwischen den Batteriezellen schließen lassen und dies längere Entladungszeitdauer für die stark geladenen Batteriezellen erforderlich macht.

**In** einer zweckmäßigen Ausgestaltung erfolgt das Laden über eine Ladestromsteuerung, bis eine vorbestimmte Anzahl von Batteriezellen eine zweite Mindestspannung überschritten hat. Ist für eine oder mehrere Batteriezellen die zweite Mindestspannung überschritten, so kann aus der Ladestromsteuerung in einen anderen Ladevorgang umgeschaltet werden.

In einer weiter bevorzugten Ausgestaltung wird das Laden nach Überschreiten der zweiten Mindestspannung über eine Ladespannungssteuerung fortgesetzt, bis eine vorbestimmte Anzahl von Batteriezellen eine dritte Mindestspannung überschritten hat. Der Einsatz der Ladespannungssteuerung erfolgt hierbei wieder spannungsgesteuert, indem er bei der zweiten Mindestspannung einsetzt und mit der dritten Mindestspannung endet. Die dritte Mindestspannung ist dabei größer als die zweite Mindestspannung.

In einer bevorzugten Weiterbildung ist vorgesehen, dass das Entladebalancing auch dann erfolgt, wenn die Batterie von einem Ladegerät getrennt ist. Hierin liegt ein besonderer Vorzug des erfindungsgemäßen Ladeverfahrens, dass die Batterie auch ihr Entladebalancing durchführen kann, wenn die Batterie sich im Einsatz befindet und beispielsweise einen Verbraucher, wie ein Flurförderzeug speist. Ein Vorteil, der sich hierbei einstellt, ist, dass im Rahmen des Herstellungsprozesses das Balancing fabrikseitig nicht zu Ende geführt werden muss, sondern ein begonnenes Balancing beim Abnehmer des Fahrzeugs fortgesetzt werden kann.

Bei den betrachteten Batterien handelt es sich bevorzugt um Lithium-Ionen-Batterien. Lithium-Ionen-Batterien sind in der Regel aus einzelnen Batteriezellen aufgebaut, die spannungsmäßig aufeinander abgestimmt sein müssen. Im Hinblick auf den Aspekt, dass der Ladevorgang iterativ sich wiederholt, hat sich für das passive Balancing eine bevorzugte Ladezeitdauer von 30-180 Minuten herausgestellt. Auch für das Entladebalancing können bevorzugt Entladezeitdauern vorgegeben werden, beispielsweise von 60 Minuten bis 240 Minuten.

Ein bevorzugtes Ausführungsbeispiel des erfindungsgemäßen Ladeverfahrens wird nachfolgend an den Figuren näher erläutert. Es zeigen:
- Figuren 1a, b: zwei unterschiedliche Ladeverfahren, wobei Figur 1b eine Ausgestaltung des erfindungsgemäßen Ladeverfahrens zeigt,
- Figur 2: die Abhängigkeit des Ladezustands einer Batteriezelle von der Zellspannung,
- Figur 3: eine schematische Ansicht für einen parallelgeschalteten Widerstand,
- Figur 4: den Ladezustand der Batteriezellen in einer Batterie,
- Figur 5: die Wirkung von passiven Balancing auf die Batteriezellen,
- Figur 6: das Ergebnis von passiven Balancing für die einzelnen Batteriezellen,
- Figur 7: das Entladebalancing für die einzelnen Batteriezellen, und
- Figur 8: das Ergebnis des Entladebalancing.

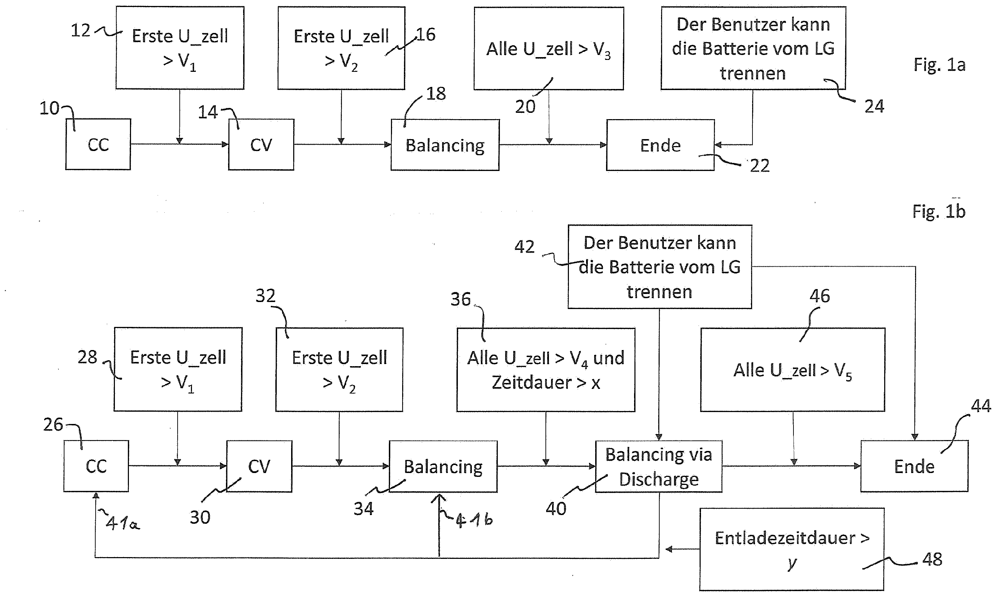

Figur 1a zeigt einen Ladevorgang, bei dem in einem ersten Ladeschritt 10 eine Ladestromsteuerung CC (constant current ) stattfindet. Sobald eine erste Batteriespannung größer als ein erster Spannungsschwellwert ist, U_zell > V₁, wird in Schritt 12 zu einem zweiten Ladeschritt 14 umgeschaltet. In dem Ladeschritt 14 erfolgt eine Steuerung der Ladespannung (CV = constant voltage) bis eine erste Zellspannung größer als ein zweiter Mindestspannungswert ist, U_zell > V₂. An Schritt 16 schließt sich das Balancing 18 an. Das Balancing 18 wird als ein passives Balancing durchgeführt, bei dem die Batteriezellen mit einer größeren Batteriespannung weniger oder gar nicht geladen werden, während Batteriezellen mit einer geringeren Batteriespannung stärker geladen werden.

Wird in Schritt 20 festgestellt, dass alle Batteriezellen einen dritten Mindestspannungswert V₃ überschreiten, so wird der Ladevorgang in Schritt 22 beendet. Der Benutzer kann nun in Schritt 24 die Batterie vom Ladegerät trennen und beispielsweise in einem Flurförderzeug verwenden. Bei der Darstellung in Figur 1 sind die Umschaltbedingungen 12, 16 und 20 lediglich beispielhaft angegeben. Selbstverständlich kann gefordert werden, dass eine Mindestanzahl von Batteriezellen den ersten oder zweiten Mindestspannungswert in den Schritten 12 oder 16 überschreiten muss. Auch für das Beenden des Balancing kann vorgesehen sein, dass nicht sämtliche Zellspannungen größer als der dritte Mindestspannungswert sein müssen, sondern es bereits ausreicht wenn eine überwiegende Zahl von Batteriezellen den dritten Mindestspannungswert überschreitet.

Figur 1b zeigt das erfindungsgemäße Ladeverfahren, das mit einem ladestromgesteuerten Ladevorgang 26 beginnt. Überschreitet eine erste Batteriezelle einen ersten Spannungsmindestwert V₁, so wird in Verfahrensschritt 28 zu einem ladespannungsgesteuerten Ladevorgang 30 umgeschaltet. Der Ladevorgang 30 dauert an, bis eine erste Batteriezelle einen zweiten Mindestspannungswert überschreitet. Dann schließt sich in Schritt 34 ein passives Balancing an, mit dem stärker aufgeladene Batteriezellen schwächer geladen und schwächer aufgeladene Batteriezellen stärker geladen werden. Der Vorgang des passiven Balancing in Schritt 34 wird fortgeführt, bis alle Batteriezellen einen vierten Mindestspannungswert V₄ überschreiten oder eine vorbestimmte Zeitdauer X verstrichen ist. Es findet also nur bis zu einem gewissen Grad ein passives Balancing 34 statt. Dies muss keineswegs vollständig sein, sondern der vierte Mindestspannungswert kann kleiner als der dritte Mindestspannungswert aus Figur 1a sein. Mit Schritt 36, wird eine zweite Balancingphase 40 eingeleitet, in der ein Balancing durch Entladung erfolgt. Durch die Entladung und den Entladevorgang, werden stärker geladene Batteriezellen stärker entladen und schwächer geladene Batteriezellen schwächer entladen. Das Entladebalancing 40 erlaubt, in Schritt 42, beispielsweise die Batterie vom Ladegerät LG zu trennen. Wird Schritt 42 durchgeführt, ist das Ladeverfahren beendet, wenn das Entladebalancing 40 abgeschlossen ist. In einer bevorzugten Ausgestaltung der Erfindung, wird das Entladebalancing auch bei getrenntem Ladegerät noch durchgeführt, bis das Ende des Entladebalancing 44 erreicht ist. Wird die Batterie in Schritt 42 nicht vom Ladegerät getrennt, so kehrt das Verfahren nach Ablauf der Entladezeitdauer Y entweder mit Schritt 41a in den Ladeschritt 26 zurück. Alternativ kann das Verfahren auch mit Schritt 41b zu dem Balancing 34 zurückkehren. Es erfolgt also ein iterativer Prozess mit zwei unterschiedlichen Balancingvorgängen, bis die Batterie vollständig geladen ist.

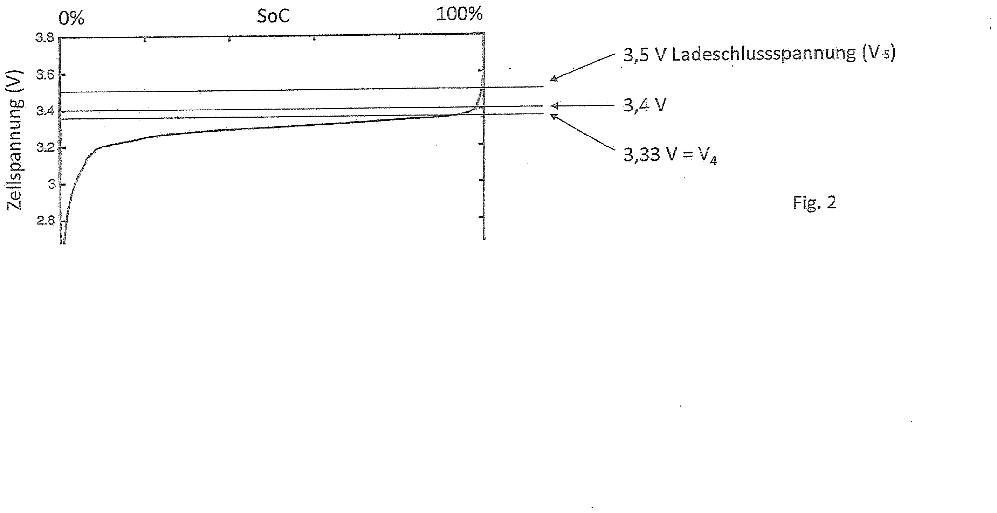

Figur 2 zeigt beispielhaft den Zusammenhang zwischen der Zellspannung und dem Ladezustand für eine Li-Ionen-Batteriezelle. Deutlich zu erkennen ist, dass eine starke Spannungsabhängigkeit im nahezu vollgeladenen Zustand der Batteriezelle vorliegt. Deutlich zu erkennen ist auch, dass zwischen 3,4 Volt und 3,5 Volt eine Änderung des Ladezustands um ein Prozent SoC erfolgt. Für einen Spannungsbereich zwischen 3,33 Volt und 3,4 Volt erfolgt dagegen eine Änderung des Ladezustands der Batterie von mehr als 5 % SoC. Unterhalb von 3,3 Volt ist aufgrund von Messtoleranzen anhand der Zellspannung keine genaue Aussage über den SoC möglich.

Bei dem erfindungsgemäßen Verfahren wird, sobald alle Zellspannungen oberhalb von 3,33 Volt (gleich V₄) liegen, das Entladebalancing 40 durchgeführt.

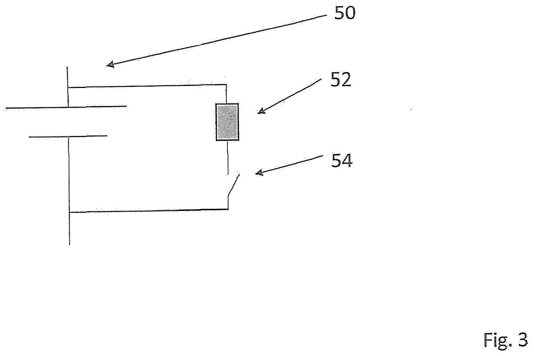

Bei dem passiven Balancing wird wie in Figur 3 dargestellt, zu einer Batteriezelle 50 ein Widerstand 52 über einen Schalter 54 parallel geschaltet. Durch die Parallelschaltung reduziert sich der für die Batteriezelle 50 zur Verfügung stehende Ladungsstrom.

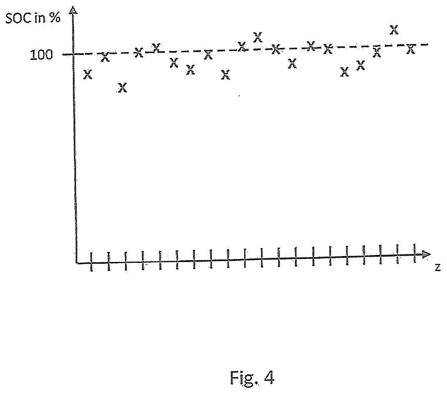

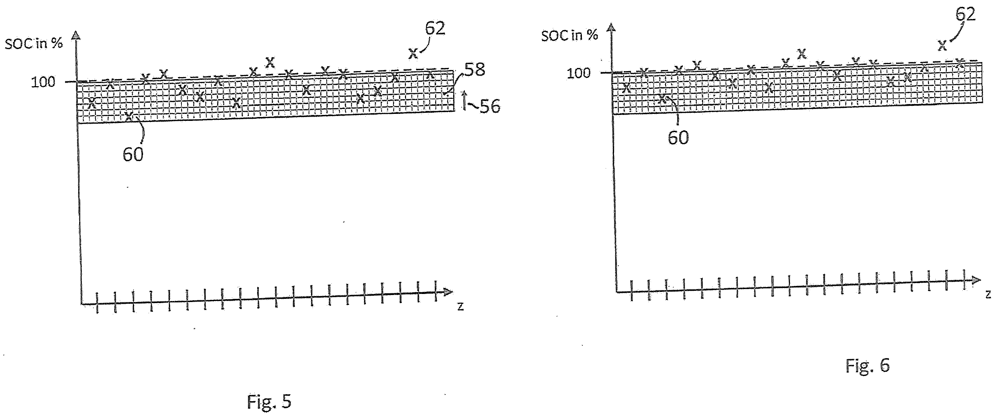

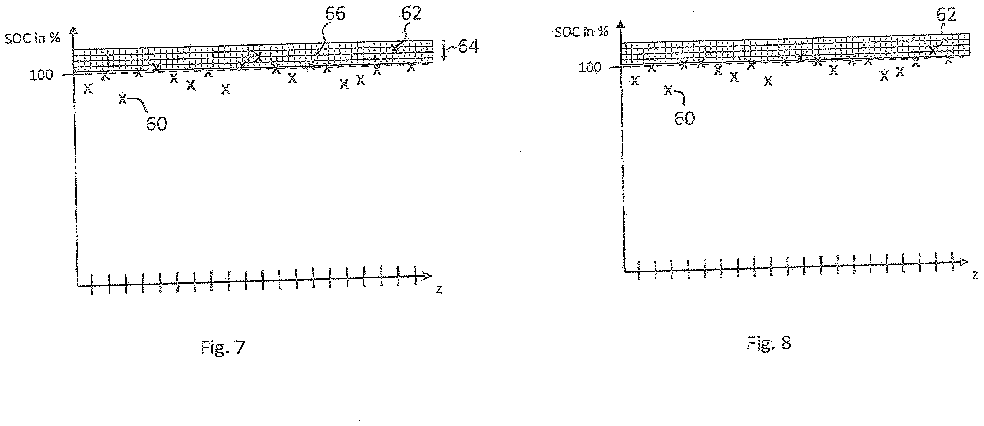

Der besondere Pfiff für das erfindungsgemäße Ladeverfahren wird an den schematischen Zeichnungen in Figur 4-8 deutlich. Figur 4 zeigt in einer qualitativen Darstellung eine Vielzahl von verschiedenen Batteriezellen, deren Spannung für jede Zelle aufgetragen ist. Dies bedeutet, dass der eingetragene Punkt in dem Diagramm für die entsprechende an der Z-Achse eingetragene Batteriezelle den entsprechenden Ladezustand der Batteriezelle angibt. Figur 5 zeigt nun die Wirkung des passiven Balancing. Bei dem passiven Balancing, werden wie durch den Pfeil 56 dargestellt, schwächer geladene Batterien stärker geladen und stärker geladene Batterien schwächer geladen. Dies bedeutet in Figur 5 beispielsweise, dass die Batteriezelle 60 einen größeren Ladestrom empfängt als die Batteriezelle 62. Durch die unterschiedlichen Ladeströme entsteht ein Bereich 58, in dem der Ladezustand der Batteriezellen stärker als bei den Vergleichszellen angehoben wird. Figur 6 zeigt das entsprechende Ergebnis des passiven Balancing. zeigen. Der Ladezustand der Batteriezelle 60 hat sich verbessert, während der Ladezustand der Batteriezelle 62 nahezu unverändert ist. Betrachtet man nun in Kombination dazu das Entladebalancing, so führt dies wie durch den Pfeil 64 angedeutet, zu einem Absinken der im Bereich 66 liegenden stärker geladenen Batteriezelle. Zunächst bedeutet das, dass die Batteriezelle 62 stärker entladen wird als die anderen Batteriezellen, sodass sich deren Ladezustand absinkt, wie in Figur 8 gezeigt. Die zu wenig geladene Batteriezelle 60 wird beim Entladebalancing nicht besonders entladen, sodass ihr Ladezustand annähernd unverändert bleibt. Durch die Kombination der beiden Balancingverfahren, werden die Spannungswerte der Batteriezellen eindeutig homogenisiert, in dem Sinne, als dass die Streuung der Ladezustände für die Batteriezellen abnimmt.

Eine Batterie, deren Batteriezelle annähernd gleich geladen ist, birgt zudem den Vorteil, dass eine Überladung oder die Gefahr des Ausschaltens der Batterie entfällt.

Der zusätzliche Vorteil des erfindungsgemäßen Ladeverfahrens ergibt sich auch im Herstellungsprozess der Batterien, da diese vor einer Auslieferung sehr viel kürzer geladen werden müssen. Die Batterie wird beispielsweise mit einem Ladezustand von 95 % SoC ausgeliefert. Das unvollständige Balancing wird jedoch beim Kunden während des Betriebs und bei anschließenden Ladevorgängen nachgeholt und der Kunde erreicht somit sukzessive die 100 % SoC, die für die Batterie garantiert ist, ohne besondere Nachteile, wie beispielsweise ein langdauerndes Balancing am Ladegerät hinnehmen zu müssen.

### Bezugszeichenliste

- 10: erster Ladeschritt
- 12: Umschaltbedingung
- 14: Umschaltbedingung
- 16: Umschaltbedingung
- 18: Balancing
- 20: Umschaltbedingung
- 22: Umschaltbedingung
- 26: CC
- 28: Verfahrensschritt
- 30: CV
- 34: passives Balancing
- 36: Verfahrensschritt
- 40: Entladebalancing
- 41a: Rückkehr zu CC
- 41b: Rückkehr zu passivem Balancing
- 42: Trennung der Batterie vom LG
- 44: Ende des Ladeverfahrens
- 50: Batteriezelle
- 52: Widerstand
- 54: Schalter
- 56: Pfeil
- 58: Bereich
- 60: Batteriezelle
- 62: Batteriezelle
- 64: Pfeil
- CC: constant current
- CV: constant voltage

- V₁: erster Spannungsschwellwert
- V₂: zweiter Spannungsschwellwert
- V₃: dritter Spannungsschwellwert
- V₄: vierter Spannungsschwellwert

- X: Zeitdauer
- Y: Entladezeitdauer
- Z: Ladezustand der Batteriezelle

## Patentansprüche

1. Verfahren zum Laden einer Batterie, insbesondere einer Batterie für ein Flurförderzeug, das folgende Schritte aufweist:
- Ladevorgang der Batterie abhängig von einer gemessenen Batteriespannung,
- passives Balancing (34) für eine Ladezeitdauer (X),
- an das passive Balancing (34) schließt sich ein Entlade-Balancing (40) für eine Entladezeitdauer (Y) an,
- wobei der Ladevorgang endet, wenn eine vorbestimmte Mindestanzahl von Batteriezellen eine Endspannung überschreitet, sonst kehrt das Verfahren nach Ablauf der Entladezeitdauer (Y) zu dem Ladevorgang oder dem passiven Balancing (34) zurück.

2. Verfahren nach Anspruch 1, **dadurch gekennzeichnet, dass** bei dem passiven Balancing (34) jede der Batteriezellen, die eine erste Mindestzellspannung (V₂) überschreitet mit einem verminderten Ladestrom versorgt wird.

3. Verfahren nach Anspruch 1 oder 2, **dadurch gekennzeichnet, dass** bei dem Entlade-Balancing (40) Ladungsunterschiede zwischen den Batteriezellen durch unterschiedliche Entladeströme und/oder -spannungen für die Batteriezellen abgebaut werden.

4. Verfahren nach Anspruch 3, **dadurch gekennzeichnet, dass** zu jeder der Batteriezellen für das Entlade-Balancing (40) ein Widerstand (52) als zusätzlicher Verbraucher parallel geschaltet werden kann.

5. Verfahren nach Anspruch 4, **dadurch gekennzeichnet, dass** für das Entlade-Balancing (40) relative Spannungsdifferenzen für mehrere Batteriezellen erfasst und die Entladezeitdauer (Y) für die Batteriezellen berechnet werden.

6. Verfahren nach einem der Ansprüche 1 bis 5, **dadurch gekennzeichnet, dass** das Laden über eine Ladestromsteuerung (CC) erfolgt, bis eine vorbestimmte Anzahl von Batteriezellen eine zweite Mindestspannung (V₂) überschritten haben.

7. Verfahren nach einem der Ansprüche 1 bis 6, **dadurch gekennzeichnet, dass** das Laden nach Überschreiten der zweiten Mindestspannung (V₂) über eine Ladespannungssteuerung (CV) erfolgt, bis eine vorbestimmte Anzahl von Batteriezellen eine dritte Mindestspannung (V₅) überschritten haben.

8. Verfahren nach einem der Ansprüche 1 bis 7, **dadurch gekennzeichnet, dass** das Entlade-Balancing (40) auch erfolgt, wenn die Batterie von einem Ladegerät getrennt ist.

9. Verfahren nach einem der Ansprüche 1 bis 8, **dadurch gekennzeichnet, dass** als Batterie eine Lithium-Ionen Batterie vorgesehen ist.

10. Verfahren nach einem der vorstehenden Ansprüche, **dadurch gekennzeichnet, dass** die Ladezeitdauer (X) für das passive Balancing (34) zwischen 30 min und 180 min beträgt.

11. Verfahren nach einem der vorstehenden Ansprüche, **dadurch gekennzeichnet, dass** die Entladezeitdauer (Y) für das Entlade Balancing (40) zwischen 60 min und 240 min beträgt.

## Claims

1. A method for charging a battery, in particular a battery for a forklift, that has the following steps:
charging the battery depending on a measured battery voltage,
passive balancing (34) for a charging duration (X),
passive balancing is followed by discharge balancing (40) for a discharging duration (Y),
wherein the charging process ends when a predetermined minimum number of battery cells exceeds an end voltage, otherwise the method returns to the charging process or passive balancing (34) after the discharging duration (Y) has elapsed.

2. The method according to claim 1, **characterized in that**, during passive balancing (34), each of the battery cells that exceeds a first minimum cell voltage (V₁) is supplied with a reduced charging current.

3. The method according to claim 1 or 2, **characterized in that**, during discharge balancing (40), charge differences between the battery cells are dissipated by means of different discharge currents and/or discharge voltages for the battery cells.

4. The method according to claim 3, **characterized in that** a resistor (52) can be connected in parallel to each of the battery cells as an additional consumer for the discharge balancing (40).

5. The method according to claim 4, **characterized in that**, for the discharge balancing (40), relative voltage differences are detected for multiple battery cells and the discharging duration (Y) for the battery cells is calculated.

6. The method according to one of claims 1 to 5, **characterized in that** charging takes place via a charging current control (CC) until a predetermined number of battery cells have exceeded a second minimum voltage (V₂).

7. The method according to one of claims 1 to 6, **characterized in that** charging after the second minimum voltage (V₂) has been exceeded takes place via a charging voltage control (CV) until a predetermined number of battery cells have exceeded a third minimum voltage (V₃).

8. The method according to one of claims 1 to 7, **characterized in that** the discharge balancing (40) also takes place when the battery is disconnected from a charger.

9. The method according to one of claims 1 to 8, **characterized in that** a lithium-ion battery is provided as the battery.

10. The method according to one of the preceding claims, **characterized in that** the charging duration (X) for the passive balancing (34) is between 30 min and 180 min.

11. The method according to one of the preceding claims, **characterized in that** the discharging duration (Y) for the discharge balancing (40) is between 60 min and 240 min.

## Revendications

1. Procédé de charge d'une batterie, en particulier d'une batterie pour un chariot de manutention, comprenant les étapes suivantes :
- Opération de charge de la batterie en fonction d'une tension de batterie mesurée,
- Équilibrage passif (34) pendant une durée de charge (X),
- Équilibrage passif (34) suivi d'un équilibrage de décharge (40) pendant une durée de décharge (Y),
- L'opération de charge se terminant lorsqu'un nombre minimal prédéterminé de cellules de batterie dépasse une tension finale, sinon le procédé revient, à l'issue de la durée de décharge (Y), à l'opération de charge ou à l'équilibrage passif (34).

2. Procédé selon la revendication 1, **caractérisé en ce que**, lors de l'équilibrage passif (34), chacune des cellules de batterie, qui dépasse une première tension de cellule minimale (V₁), est alimentée par un courant de charge réduit.

3. Procédé selon la revendication 1 ou 2, **caractérisé en ce que**, lors de l'équilibrage de décharge (40), des différences de charge entre les cellules de batterie sont réduites au moyen de courants et/ou de tensions de décharge différents pour les cellules de batterie.

4. Procédé selon la revendication 3, **caractérisé en ce que**, pour l'équilibrage de décharge (40), une résistance (52) peut être montée en parallèle à chacune des cellules de batterie, en tant que consommateur supplémentaire.

5. Procédé selon la revendication 4, **caractérisé en ce que**, pour l'équilibrage de décharge (40), des différences de tension relatives sont détectées pour plusieurs cellules de batterie et la durée de décharge (Y) est calculée pour les cellules de batterie.

6. Procédé selon l'une des revendications 1 à 5, **caractérisé en ce que** la charge s'effectue par l'intermédiaire d'une commande à courant constant (CC), jusqu'à ce qu'un nombre prédéterminé de cellules de batterie aient dépassé une deuxième tension minimale (V₂).

7. Procédé selon l'une des revendications 1 à 6, **caractérisé en ce que** la charge, après dépassement de la deuxième tension minimale (V₂), s'effectue par l'intermédiaire d'une commande à tension constante (CV), jusqu'à ce qu'un nombre prédéterminé de cellules de batterie aient dépassé une troisième tension minimale (V₃).

8. Procédé selon l'une des revendications 1 à 7, **caractérisé en ce que** l'équilibrage de décharge (40) s'effectue également lorsque la batterie est débranchée d'un chargeur.

9. Procédé selon l'une des revendications 1 à 8, **caractérisé en ce qu'**une batterie lithium-ion est prévue en tant que batterie.

10. Procédé selon l'une quelconque des revendications précédentes, **caractérisé en ce que** la durée de charge (X) pour l'équilibrage passif (34) est comprise entre 30 min et 180 min.

11. Procédé selon l'une quelconque des revendications précédentes, **caractérisé en ce que** la durée de décharge (Y) pour l'équilibrage de décharge (40) est comprise entre 60 min et 240 min.
